# EUROPEAN PATENT APPLICATION

(11) **EP 1 830 062 A1**
(43) Date of publication of application: **05.09.2007**
(21) Application number: 07102597.7
(22) Date of filing: 16.02.2007
(51) Int. Cl.: F03D 3/04, F03D 11/04, F03D 7/06

(54) **Wind energy converter and windmill of the wind energy converter**

(30) Priority: 16.02.2006 NL 1031174
(71) Applicant: van den Hurk Martinus Wilhelmus Petrus, 5386 RS Geffen (NL)
(72) Inventor: van den Hurk Martinus Wilhelmus Petrus, 5386 RS Geffen (NL)
(74) Representative: van Loon, C.J.J.

(57) **Abstract**

A wind energy converter comprising at least one building and a windmill provided with a rotor rotatable about a centerline, which rotor is provided with a plurality of rotor blades. The at least one building provides a receiving space which is open at the top. The rotor is at least partly recessed in the receiving space such that, during rotation of the rotor about the centerline, the extent to which at least one rotor blade of the plurality of rotor blades is recessed in the receiving space varies.

## Description

The invention relates to a wind energy converter comprising at least one building and a windmill provided with a rotor rotatable about a centerline which is provided with a plurality of rotor blades.

Such a wind energy converter is, for instance, known from European patent application EP 1255932. This known wind energy converter comprises a rotor with a horizontal centerline which is placed on a roof of a building and forms an integral part of a frost cover.

This known wind energy converter has the drawback that the wind energy converter forms a relatively large construction on the roof so that the appearance of the building changes to a great degree and/or gets an unusual character. This may, in addition, be a drawback for obtaining a permit for placing the wind energy converter. Further, of the relatively large construction placed on top of the roof, only a limited part of the height dimension (less than half) is effectively used as a wind-catching surface.

It is an object of the invention to obviate at least one of these problems.

To this end, according to the invention, the wind energy converter is provided which is characterized in that the at least one building provides a receiving space which is open at the top, while the rotor is at least partly recessed in the receiving space such that, during rotation of the rotor about the centerline, the extent to which at least one rotor blade of the plurality of rotor blades is recessed in the receiving space varies.

This offers the advantage that the recessed part of the rotor does not contribute to a visually perceivable construction on or to the building, so that the height of the construction on or to the building can be limited.

Of the windmill provided with the rotor rotatable about the centerline, which rotor is provided with a plurality of rotor blades, while the rotor is at least partly recessed in the receiving space such that, during rotation of the rotor about the centerline, the extent to which at least one rotor blade of the plurality of rotor blades is recessed in the receiving space varies, when wind falls on the rotor blades, only one half of the rotor, for instance an upper half, contributes to converting wind energy into usable energy such as electrical, mechanical or thermal energy. If wind also falls on the other half of the rotor, this causes a counterforce reducing the efficiency of the windmill. Here, efficiency is understood to mean the effective (mechanical, thermal or and/or electrical) energy produced by the windmill divided by the energy represented by the wind falling on the rotor (for instance expressed in output). Because, according to the invention, the rotor is partly recessed in the receiving space of the roof, the wind will not be able to fall on the part of the rotor recessed in the receiving space of the roof, so that generation of counterforce is, at least partly, prevented.

Preferably, the rotor blades each extend substantially in a plane extending substantially parallel to the centerline of the rotor.

According to one embodiment, the rotor blades each extend substantially in a plane comprising the centerline of the rotor. This offers the advantage that it is possible to provide rotor blades combining a relatively large surface on which the wind can fall with a relatively small radial length of the rotor blades. Thus, a wind energy converter is provided with a relatively large power and a relatively small height dimension.

According to an alternative embodiment, the rotor blades each extend substantially in a plane which is remote from the centerline of the rotor. Preferably, the rotor blades are then substantially flat.

Preferably, the plane in which a first rotor blade substantially extends intersects a second rotor blade adjacent to that rotor blade. Preferably, in that plane, there is an open space between the first rotor blade and the second rotor blade. This offers the advantage that the windmill provided with the rotor with rotor blades has a higher efficiency in this configuration than the windmill with the rotor where the plane in which the first rotor blade substantially extends does not intersect a second rotor blade adjacent to that rotor blade and/or, in that plane, there is no open space between the first rotor blade and the second rotor blade.

Preferably, the rotor blades are movably received in the rotor such that the rotor blades can assume a first and a second position, while, if the rotor blades are in the first position, each rotor blade extends in the direction of the rotor blade located next to the rotor blade mentioned first in counterclockwise direction, and while, if the rotor blades are in the second position, each rotor blade extends in the direction of the rotor blade located next to the rotor blade mentioned first in clockwise direction. The rotor where the plane in which the first rotor blade substantially extends intersects the second rotor blade adjacent to that rotor blade and, optionally the open space between the first rotor blade and that rotor blade is located in that plane has a higher efficiency when blown in a first direction then when blown in a second direction opposite to the first direction. By thus movably receiving the rotor blades in the rotor, the direction in which the rotor has the higher efficiency when blown can be reversed, to adapt the rotor to a local or temporary wind direction.

Preferably, the rotor blades are pivotally received in the rotor, to enable placement of the rotor blades in the first and the second position. Thus, the rotor blades are movable from the first to the second position and vice versa in a simple manner.

Preferably, the windmill is placed at a roof of the at least one building. This is because, at the roof, generally the largest amount of wind will be able to fall on the rotor of the windmill or wind having the highest speed. Preferably, the receiving space is accommodated in the roof of the at least one building. Often, particularly with, for instance, barns or industrial buildings, the space right under the roof, in which the rotor is at least recessed, is normally not used, so that the building can keep its original function.

Preferably, the centerline of the rotor extends substantially in or below a plane in which the roof extends and/or in or below a virtual plane extending in line with the roof. This offers the advantage that the above-mentioned counterforce is not exerted, at least exerted less, so that the efficiency will be optimal.

Preferably, the centerline of the rotor extends substantially parallel to an edge of the open top side of the receiving space, and is located at an equal vertical height as or lower than the edge of the receiving space. This offers the advantage that the above-mentioned counterforce is not exerted, at least exerted to a still lesser extent, so that the efficiency will be optimal.

Preferably, the roof comprises at least one upwardly inclined roof part. This offers the advantage that the wind falling against the upwardly inclined roof can be guided to the rotor, so that a larger output of wind can fall on the rotor. Thus, the wind energy converter can produce a larger amount of energy.

Preferably, the roof comprises a ridge and the receiving space is located in the ridge. This offers the advantage that the rotor is suitable to be driven by wind flowing from the one side of the ridge or from the other side of the ridge. Thus, the wind energy converter is suitable for use with wind from a large number of wind directions. Preferably, the centerline extends substantially parallel to the ridge.

Preferably, the windmill is provided with a gutter extending substantially parallel to the centerline along a lower side of the rotor. This offers the advantage that it is possible to, at least partly, seal the roof, where the rotor is partly recessed in the roof, for instance against precipitation and/or draft. Preferably, a largest horizontal width of the gutter, in a direction transverse to the centerline, is larger than a diameter of the rotor transverse to the centerline. Thus, the rotor can, at least partly, simply be recessed in the gutter.

Preferably, the rotor comprises three rotor blades. Preferably, the number of rotor blades of the rotor is three. Thus, a simple rotor is provided which can be produced inexpensively. In addition, the rotor with three rotor blades has the advantage that the rotor blades form no or only a slight wind shadow for one another, so that a high efficiency is provided for the windmill. In addition, it is found that the windmill provided with the rotor, where the plane in which the first rotor blade substantially extends intersects the second rotor blade adjacent to that rotor blade and, optionally, in that plane, there is a space between the first rotor blade and the second rotor blade, has a high efficiency, while the rotor has a simple construction, for instance because substantially flat rotor blades can advantageously be used.

Preferably, the rotor blades are connected with the at least one building by means of resilient and/or vibration-damping means. To this end, for instance, the resilient and/or vibration-damping means are received between the rotor blades and a shaft of the windmill and/or between the shaft and the at least one building. This offers the advantage that mechanical vibrations and/or jolts arisen in the rotor blades are not, at least in damped form, passed on to the at least one building, so that, for instance, noise nuisance and/or wear is prevented, at least reduced.

Preferably, the windmill is provided with a brake for bringing the rotor to a standstill or keeping the rotor in a standstill. Preferably, the windmill is arranged for making the rotor assume a predetermined rotational position in a standstill. Preferably, in the predetermined rotational position, at least one rotor blade points substantially vertically upwards. If then the rotor comprises three rotor blades, this offers the advantage that precipitation can simply slide off the other two rotor blades pointing downwards.

Preferably, the rotor is received between two roof rafters of the roof. This offers the advantage that the roof rafters which are, for instance, part of a supporting structure of the roof can be preserved if the windmill is mounted at an existing roof. In addition, the roof rafters can act as a supporting structure for the windmill.

Preferably, the windmill is provided with a load apparatus connectable or connected with the rotor for generating mechanical, thermal and/or electrical energy. Preferably, the windmill is provided with a flywheel connectable or connected with the rotor.

Preferably, the at least one building comprises an industrial building or a barn. This offers the advantage that the often empty space near the roof of the industrial building or barn can be used for generating energy with the aid of the windmill.

Preferably, at least one rotor blade extends in a plane including an angle, which is not equal to zero degrees, with the centerline of the rotor. Thus, it is possible to blow the rotor more efficiently if the wind is substantially not transverse to the centerline.

Preferably, the angle included by the rotor blade and the centerline is settable, for instance around an, optionally virtual, setting shaft extending transverse to the centerline. This offers the advantage that a most efficient blow direction of the rotor is settable, for instance adaptable to a temporary wind direction.

Preferably, the wind energy converter is provided with a plurality of rotors. This offers the advantage that a large efficient rotor blade surface is provided, while it is possible to keep the dimensions of the rotors themselves limited, for instance to simply producible or mountable dimensions.

Preferably, the wind energy converter is provided with means for removing ice and/or snow from the rotor and/or the gutter. Thus, the wind energy converter can simply be stripped of snow and/or ice.

The invention further relates to a windmill of the wind energy converter according to the invention.

This windmill comprises, for instance, a rotor rotatable about a centerline provided with a plurality of rotor blades and a gutter extending substantially parallel to the centerline along a lower side of the rotor, while the rotor is at least partly recessed in the gutter such that, during rotation of the rotor about the centerline, the extent to which the at least one rotor blade of the plurality of rotor blades is recessed in the gutter varies.

According to another aspect of the invention, a windmill comprises a rotor provided with at least one rotor blade, while the at least one rotor blade is at least partly light-transmitting and/or transparent, for instance completely light-transmitting and/or transparent. This offers the advantage that the at least one rotor blade forms, at least substantially, no cast shadow near the windmill. Cast shadows are generally experienced as being disturbing by people and animals.

Preferably, at least one rotor blade of the plurality of rotor blades of the wind energy converter according to the invention is at least partly light-transmitting.

Preferably, at least one rotor blade of the plurality of rotor blades of the wind energy converter according to the invention is at least partly transparent.

The invention will be discussed hereinafter with reference to the drawing serving as a non-limiting example, in which:
Fig. 1a shows a schematic cross section of a first embodiment of a wind energy converter according to the invention;
Fig. 1b shows a schematic cross section of a second embodiment of a wind energy converter according to the invention;
Fig. 1c shows a schematic perspective view of the embodiment shown in Fig. 1b;
Fig. 1d shows a schematic cross section of a third embodiment of a wind energy converter according to the invention;
Fig. 2 shows a schematic top plan view of a wind energy converter according to a fourth embodiment of the invention;
Fig. 3 shows a schematic cross section of an embodiment of a rotor of the wind energy converter according to the invention;
Fig. 4 shows a schematic view of an embodiment of a part of a windmill of the wind energy converter according to the invention;
Fig. 5 shows a schematic cross section of an alternative embodiment of the rotor of the windmill according to the invention;
Figs. 6a and 6b show a schematic cross section of an advanced embodiment of the rotor of the windmill according to the invention;
Figs. 6c and 6d show schematic cross sections of alternative advanced embodiments of the rotor of the windmill according to the invention;

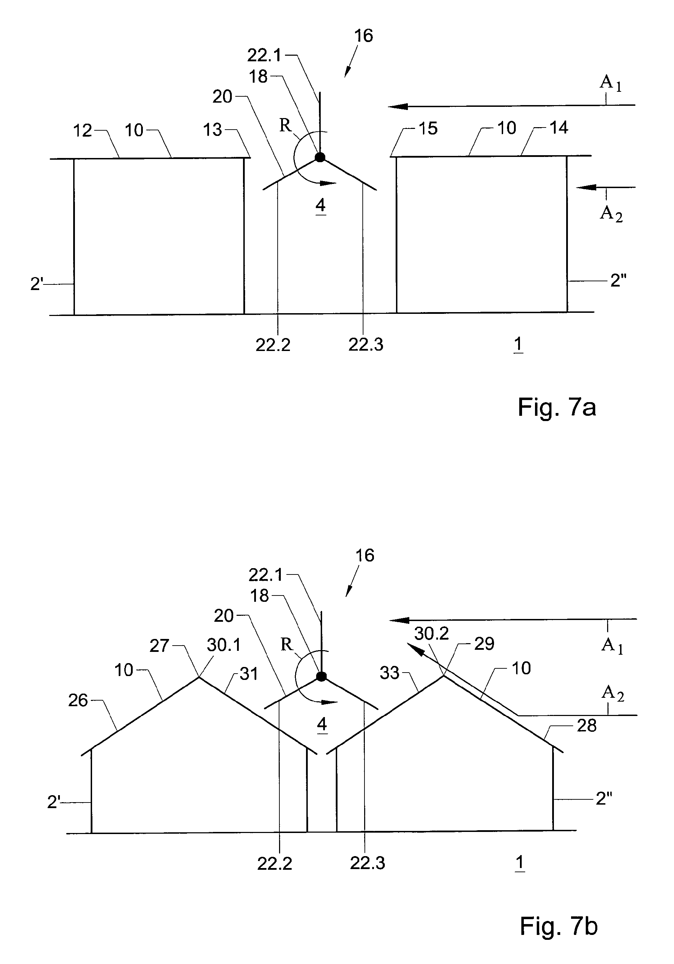

Fig. 7a shows a schematic cross section of a fifth embodiment of a wind energy converter according to the invention; and
Fig. 7b shows a schematic cross section of a sixth embodiment of a wind energy converter according to the invention.

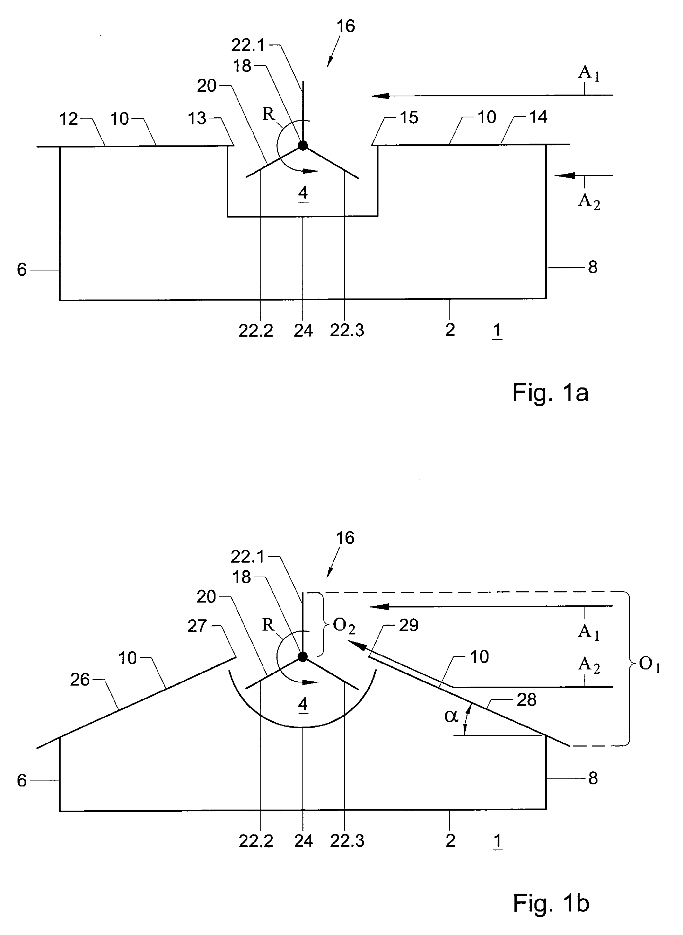

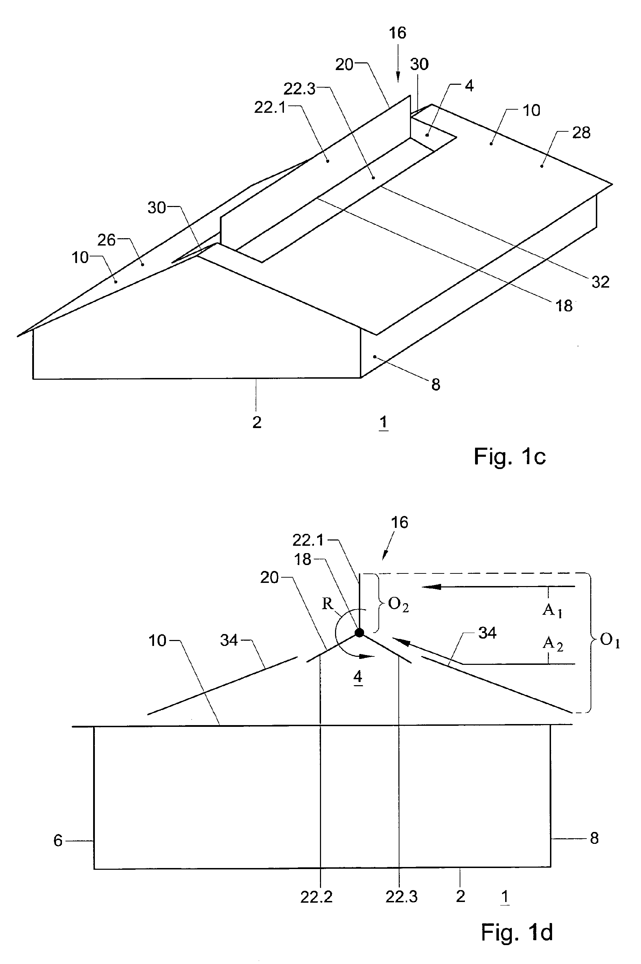

Fig. 1a shows a schematic cross section of a first embodiment of a wind energy converter 1 according to the invention. The wind energy converter 1 comprises a building 2, in this example an industrial building. The building 2 comprises walls 6,8 and a roof 10. In this example, the roof 10 comprises a first roof part 12 and a second roof part 14. The roof 10 of the building 2 is further provided with a receiving space 4. The receiving space 4 is open at the top.

In Fig. 1a, the wind energy converter 1 is further provided with a windmill 16. The windmill 16 comprises a rotor 20 rotatable about a centerline 18. In this example, the centerline 18 extends substantially parallel to the first and the second roof part 12, 14. In this example, the centerline 18 extends substantially horizontally. In this example, the rotor 20 extends between the first roof part 12 and the second roof part 14. The rotor 20 is provided with a plurality of rotor blades 22.i (i=1,2,3..), in this example with three rotor blades 22.i. The rotor blades 22.1 each extend substantially in a plane extending substantially parallel to the centerline 18. In this example, the rotor blades 22.i each extend substantially in a plane comprising the centerline 18. The rotor blades 22.i are further rotationally evenly distributed around the centerline 18. In this example, an angle included by each two rotor blades 22.i is substantially equal to 120 degrees.

In Fig. 1a, the rotor 20 is partly recessed in the receiving space 4 of the roof 10 of the building 2. Thus, the rotor 20 partly extends below a surface defined by the roof 10 and partly above the surface defined by the roof 10.

In Fig. 1a, the windmill 16 is further provided with a gutter 24. In this example, a space enclosed by the gutter forms the receiving space 4. It will be clear that, if the windmill 16 is not provided with the gutter 24, the whole interior space of the building 2 enclosed by the walls 6,8 and the roof 10 forms the receiving space 4. The gutter 24 extends substantially parallel to the centerline 18 along a lower side of the rotor 20. A largest horizontal width of the gutter 24, measured in a direction transverse to the centerline, is, in this example, larger than a diameter of the rotor 20, measured transverse to the centerline 18. In Fig. 1a, the rotor 20 is partly recessed in the gutter 24. In this example, the gutter 24 forms a seal of the roof 10 along the lower side of the rotor 20. The seal prevents, for instance, rain and/or draft from entering the building and/or warm interior air from leaving the building along or via the rotor 20. Preferably, the gutter 24 is provided with a discharge for discharging rain and/or other precipitation. In a special embodiment, the wind energy converter 1 may be provided with means for removing ice and/or snow from, for instance, the rotor and/or the gutter, such as for instance a heat source and/or a supply system for supplying a melt-promoting means such as for instance salt.

The wind energy converter 1 described so far operates as follows. In general, it holds that wind falling on a rotor blade 22.i of the rotor 20 will exert a force on that rotor blade 22.i. Here, the force is directed in a direction downstream in the wind direction. The force will therefore exert a moment on the rotor 20 directed to rotate the rotor 20 such that the respective rotor blade 22.i moves in the downstream direction. It will be clear that, if the rotor 20 is exposed to the wind completely, the wind exerts a first force on a rotor blade 22.1 extending above the centerline 18 of the rotor 20, which first force results in a first moment on the rotor which is oppositely directed to a second moment resulting from a second force exerted on a rotor blade 22.3 extending below the centerline 18. Because the first and the second moment are oppositely directed, they will, at least partly, cancel each other out. Thereby, a part of the wind energy corresponding with the canceled moment is lost, i.e. cannot be used to be converted into, for instance, electrical, mechanical and/or thermal energy.

Above-mentioned problem is obviated in that the rotor 20 is partly recessed in the receiving space 4. Wind blowing according to arrow A₁ in the direction of the rotor 20 will hit the rotor blade 22.1. However, wind blowing according to the arrow A₂ in the direction of the rotor 20 will not hit the rotor blade 22.3, but the wall 8. Since the rotor 20 is at least partly recessed in the receiving space 4 in the roof 10 of the building 2, in use, a first effective rotor surface, i.e. the rotor surface as measured transverse to the direction of the wind and on which the wind can act, which extends above the centerline 18 of the rotor 20 will be larger than a second effective rotor surface extending below the centerline 18 of the rotor 20. Consequently, the first force exerted by the wind on a first part of the rotor 20 (rotor blade 22.1 in Fig. 1a) extending above the centerline 18 is larger than the second force exerted by the wind on a second part of the rotor 20 (rotor blade 22.3 in Fig. 1a) extending below the centerline. The first moment resulting from the first force will therefore be larger than the second moment resulting from the second force, so that the rotor 20 will start to rotate, in this example in the direction of the arrow R. During rotation of the rotor 20 about the centerline 18, the extent to which each rotor blade 22.i of the rotor 20 is recessed in the receiving space 4 will vary. This is because, in this example, during rotation of the rotor 20, each rotor blade 22.i will alternately be substantially completely recessed in the receiving space 4, when the respective rotor blade 22.i moves below a plane in which the roof 10 extends, and be completely not recessed in the receiving space 4 when the respective rotor blade 22.i moves above the plane in which the roof 10 extends. It will be clear that the part of a rotor blade 22.i recessed in the receiving space 4 is not exposed to the wind.

In the example of Fig. 1a, the rotor 20 is recessed in the roof 10 of the building 2 substantially up to the centerline 18. In this example, the centerline 18 of the rotor 20 extends substantially parallel to a first edge 13 and a second edge 15 of the open top side of the receiving space 4, and the centerline 18 is substantially at an equal height as the edges 13,15 of the receiving space 4. This offers the advantage that the second effective rotor surface extending below the centerline 18 is substantially zero. Thus, the wind will exert substantially no second force on the second part of the rotor 20 extending below the centerline 18, so that the rotor can efficiently, i.e. substantially without counteracting second force and resulting second moment, be driven by the wind. Preferably, the rotor 20 will be recessed in the roof 10 such that the centerline is located in the plane of the roof 10 or below the plane of the roof 10. Preferably, 30-70% of the height dimension of the rotor is located below the plane of the roof 10, more preferably 40-60% of the height dimension of the rotor is located below the plane of the roof 10, most preferably substantially 50% of the height dimension of the rotor is located below the plane of the roof 10.

Since the rotor 20 is partly recessed in the receiving space 4, in a top side of the roof in Fig. 1a, the rotor can be driven by wind from multiple wind directions. This is because it is irrelevant to the above-described operation whether the wind of Fig. 1a comes from the right, as described hereinabove, or from the left. This is because at least one rotor blade, rotor blades 22.2 and 22.3 in Fig. 1a, is screened against wind from opposite wind directions, for instance from the left or from the right in Fig. 1a, in that it is at least partly recessed in the receiving space 4. Of course, if the wind comes from the left, the rotational direction of the rotor 20 will be opposite to the direction of the arrow R.

According to one aspect of the invention, the wind energy converter is arranged for converting wind energy into other energy forms such as mechanical, thermal and/or electrical energy. To this end, the rotor is, for instance, connected with a load apparatus for generating mechanical, thermal and/or electrical energy, such as an electrical generator. In a special embodiment, the wind energy converter is arranged for supplying electrical energy to an electricity grid. The rotor may further be connected with a flywheel for compensating for variations in the force exerted on the rotor by the wind and/or for making the rotor rotate constantly.

Fig. 1b shows a schematic cross section of a second embodiment of a wind energy converter 1 according to the invention. Fig. 1c shows a schematic perspective view of the embodiment shown in Fig. 1b. Parts in Figs. 1b and 1c which correspond to parts in Fig. 1a are designated by corresponding reference numerals.

In Figs. 1b and 1c, the wind energy converter 1 also comprises a building 2, in this example a barn, for instance for cattle. In this example, the roof 10 comprises an upwardly inclined first roof part 26 and an upwardly inclined second roof part 28. Such a roof has a ridge 30, at least where no recess, for instance for the benefit of the rotor 20, is present. In this example, the centerline 18 extends from the rotor 20 substantially parallel to the first and the second roof part 26,28.

In the example of Figs. 1b and 1c, a radial length of the rotor blades is substantially three meters. It will be clear that, depending on dimensions of the building, locally common wind directions and/or other restrictions, larger or smaller radial lengths may be used.

The upwardly inclined first roof part 26 has a first edge 27 of the roof forming the highest point of the first roof part 26 near the rotor 20. The upwardly inclined second roof part 28 has a second edge 29 of the roof forming the highest point of the second roof part 28 near the rotor 20. The first edge 27 of the roof forms the first edge of the open top side of the receiving space 4. The second edge 29 of the roof forms the second edge of the open top side of the receiving space 4. In Figs. 1b and 1c, the rotor 20 is partly recessed in the receiving space 4 of the roof 10 of the building 2. During rotation of the rotor 20 about the centerline 18, the extent to which each rotor blade 22.i of the rotor 20 is recessed in the receiving space 4 will vary in time. So, it holds that, viewed in a direction transverse to the centerline 18, on both sides of the rotor 20, a point 27,29 of the roof 10 is higher in vertical direction than a lowest point of the rotor 20. In this example, the receiving space 4 is located in the ridge 30. Thus, the rotor 20 is partly recessed in the ridge 30. Thus, the rotor 20 extends partly below a roof surface 10 defined by the first and second roof part 26,28 and partly above the roof surface 10. Preferably, the rotor 20 will be recessed in the receiving space 4 such that the centerline 18 of the rotor 20 is located in or below a virtual plane extending in line with the first and/or second roof part 26,28. Preferably, the rotor 20 will be recessed in the receiving space 4 of the roof 10 such that the centerline 18 is located at the vertical height of the first or second edge 27,29 of the roof. More in general, it thus preferably holds that the centerline 18 of the rotor 20 extends substantially parallel to an edge 27,29 of the receiving space 4, and is located at an equal vertical height as or lower than the edge 27,29 of the receiving space 4. Preferably, 30-70% of the height dimension of the rotor is recessed in the receiving space 4, more preferably, 40-60% of the height dimension of the rotor is recessed in the receiving space 4, most preferably, substantially 50% of the height dimension of the rotor is recessed in the receiving space 4.

In Fig. 1b, the windmill 16 is further provided with the gutter 24. In this example, a space enclosed by the gutter forms the receiving space 4. In this example, the gutter is designed as a part of a cylinder extending substantially parallel to the centerline 18 along a lower side of the rotor 20. In this example, a centerline of the cylinder substantially coincides with the centerline 18 of the rotor 20. Thus, the gutter 24 forms a tight enclosure of the rotor 20. Fig. 1b shows that, between the gutter 24 and the roof 10, an opening is provided. This may, for instance, be favorable as ventilation when, for instance, cattle is present in the building.

In Figs. 1b and 1c, the centerline 18 of the rotor 20 is located substantially in a position which coincides with or is vertically downstream of the ridge 30. It will be clear that the centerline 18 may also be positioned so as to be laterally displaced with respect to the ridge 30.

The operation of the wind energy converter shown in Figs. 1b and 1c is substantially equal to that of the wind energy converter shown in Fig. 1a. Wind blowing in the direction of the rotor 20 according to arrow A₁ will hit the rotor blade 22.1. However, wind blowing in the direction of the rotor 20 according to arrow A₂ will not hit the rotor blade 22.3, but the upwardly inclined second roof part 28. This offers the advantage that the wind hitting the upwardly inclined second roof part 28 is guided along the second roof surface 28 in Figs. 1b and 1c to the first effective rotor surface, in this example rotor blade 22.1. Thus, in this example, a larger amount of wind, flowing through an imaginary surface O₁, is concentrated on the surface O₂ of the first effective rotor surface extending above the centerline 18.

Preferably, an angle of inclination α of the first and/or second roof part 26,28 is more than 0°, more preferably more than 10°, most preferably more than 20°. Thus, in an efficient manner, wind falling on the upwardly inclined roof surface is guided to the rotor. Thus, a larger amount of wind (energy) is concentrated on the rotor than when the angle of inclination α of the roof is 0° or less. Preferably, the angle of inclination is less than 40°, more preferably less than 30°. This is because, if the angle of inclination is too large, a first airflow which falls on the upwardly inclined roof surface and is guided to the rotor can make a second airflow which directly (horizontally) flows in the direction of the rotor deflect upwards before this second airflow falls on the rotor. Thus, at least a part of, the second airflow is not supplied to the rotor, so that the efficiency of the wind energy converter will not be optimal.

The windmill 16 of the wind energy converter 1 according to the invention, as for instance shown in Figs. 1a, 1b and 1c, can be placed at an existing roof 10 of an existing building 2. To this end, for instance, the roof 10 is provided with a recess, for instance recess 32 in Fig. 1c. Thus, the recess forms the open top side of the receiving space 4, in which the rotor 20 can partly be recessed. As described with reference to Figs. 1a, 1b and 1c, on a bottom side, the receiving space 4 can at least partly be sealed by means of a gutter 24, for instance to prevent rain and/or draft from entering the building through the recess.

It is also possible for the windmill 16 to be placed on top of an existing roof 10 of an existing building 2, while no recess is made in the existing roof 10. To this end, the windmill 16 can comprise a frame (not shown) for receiving the rotor 20 therein, and placing the rotor 20 on the roof 10 of the building 2. In this case, the building 2 can be provided with a top roof 34 which is, at least partly, placed over the existing roof 10, such as for instance shown in Fig. 1d. Here, the top roof is considered a part of the building. In this case, it holds that the receiving space 4 is formed by a space below the top roof 34. The rotor 20 is thus partly recessed in the receiving space 4 of the top roof 34. Thus, it is, for instance, but not exclusively, possible to place an upwardly inclined top roof 34 over the existing flat roof 10 of the building 2. Thus, though the appearance of the building 2 is changed from a flat roof to an upwardly inclined roof, in general this is will not be experienced as disturbing, since upwardly inclined roofs are also common. In addition, in the example of Fig. 1d, the larger amount of wind flowing through the imaginary surface O₁ is concentrated on the surface O₂ of the first effective rotor surface extending above the centerline 18, as described with reference to Figs. 1b and 1c. Thus, the embodiment shown in Fig. 1d will be more efficient than the embodiment shown in Fig. 1a.

Parts in Fig. 1d which correspond to parts in Figs. 1a, 1b and/or 1c are designated by corresponding reference numerals.

Since, in the example of Fig. 1d, the existing roof 10 of the building is preserved, it will be clear that it is not necessary for the top roof 34 to be watertight. It will be clear that, in this case, it is not necessary for the windmill to be provided with the gutter.

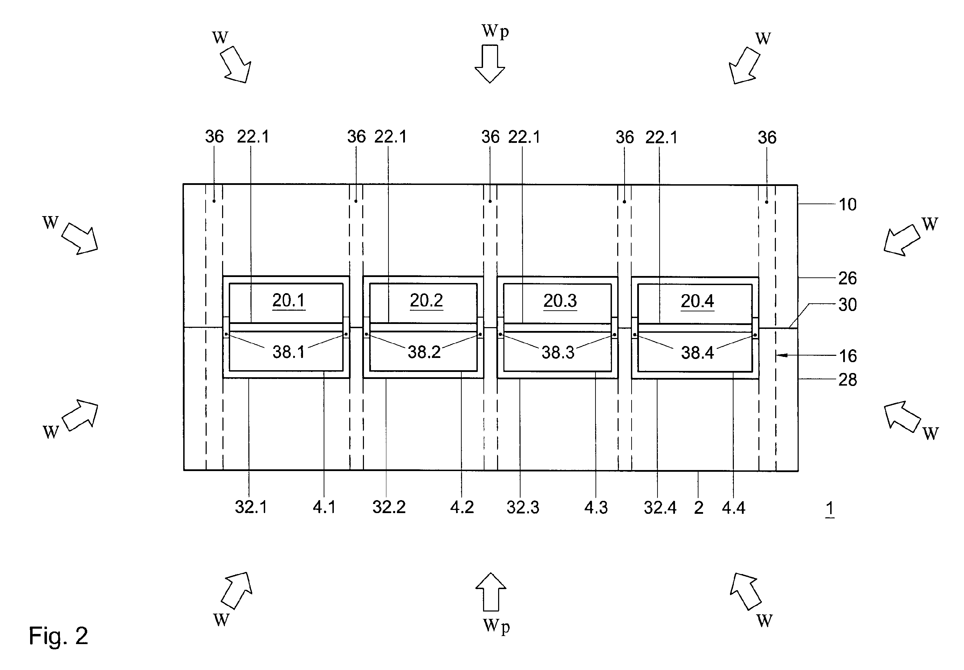

Fig. 2 shows a schematic top plan view of a wind energy converter 1 according to a fourth embodiment of the invention. Parts in Fig. 2 which correspond to parts in Figs. 1a, 1b, 1c and/or 1d are designated by corresponding reference numerals.

In Fig. 2, the wind energy converter 1 also comprises a building 2. In this example, the roof 10 comprises an upwardly inclined first roof part 26 and an upwardly inclined second roof part 28. The roof parts 26,28 come together in the ridge 30. It will be clear, however, that the roof 10 may also comprise a flat roof and/or a roof with only one upwardly inclined roof part. In this example, the centerline 18 of the rotor 20 extends substantially horizontally, parallel to the first and the second roof part 26,28.

The wind energy converter 1 in Fig. 2 is provided with a plurality of rotors 20.j (j=1, 2, 3,...). Each rotor 20.j is partly recessed in the roof 10 in a receiving space 4.j corresponding with the rotor. The recess 32.j corresponding with the rotor 20.j then forms the open top side of the receiving space 4.j corresponding with the rotor 20.j. In this example, each rotor 20.j is received between two roof rafters 36 of the building 2 which, for instance, support the roof 10. Thus, the recesses 32.j are also each received between two roof rafters 36. This offers the advantage that the roof rafters 36 which are, for instance, part of a support structure of the roof 10 can be preserved if the windmill 16 is placed at an existing roof. In addition, the roof rafters 36 can act as a support structure for the windmill 16.

Fig. 2 shows that the rotors 20.j are connected with the building 2 by means of shafts 38.j. It will be clear that the shafts 38.j may also be part of a continuous shaft connecting multiple rotors 20.j with the building 2. It is, for instance, possible that a shaft 38.j is received in a receptacle, for instance a bearing, which is connected with the building 2, for instance with the roof 10 and/or a roof rafter 36.

In Fig. 2, the arrows W,Wp indicate possible directions of wind which can make the rotors 20.j rotate. It will be clear that substantially all wind directions can make the rotors rotate to a greater or lesser extent. It will further be clear that the wind directions indicated by the arrows W_{P}, i.e. the wind directions extending transverse to the centerline 18, will make the rotors 20.j rotate most efficiently. It is therefore favorable to position the wind energy converter 1 such that the centerline 18 is oriented substantially transversely to the locally most common wind direction.

In Fig. 2, the centerlines of the rotors are directed substantially parallel to the ridge, transversely to the roof rafters. It will be clear that a centerline of at least one of the rotors can also include an angle with the ridge. The centerline may then, for instance, extend substantially parallel to the upwardly inclined roof part and/or horizontal and/or in an intermediate direction. As an example, it is mentioned that the centerline extends substantially in a direction parallel to the roof rafters, upwardly inclined in this example. In that case, the centerline may, for instance, substantially extend at a centerline angle of inclination which is substantially equal to or is between the angle of inclination α of the upwardly inclined roof part and an angle of 0° of the horizontal.

In the example of Fig. 2, the rotors 20.j are interconnected and rotationally positioned such that the rotor blades 22 of adjacent rotors 22.j extend substantially in line with one another. This offers, for instance, the advantage that a well-balanced appearance of the wind energy converter 1 is provided. It will be clear that it is also possible that the rotor blades 22 of adjacent rotors 20.j are rotationally staggered with respect to one another, preferably rotationally evenly distributed, in this example for instance over 30° or a plurality thereof, such as for instance 60°, 90° or 180°. This offers the advantage that a very uniform rotation of the assembly of rotors 20.j can be obtained.

It will be clear that, if the wind energy converter 1 comprises the plurality of rotors 20.j, it is also possible for each of at least two of the rotors 20.j to be connected with mutually different load apparatuses for generating mechanical, thermal and/or electrical energy.

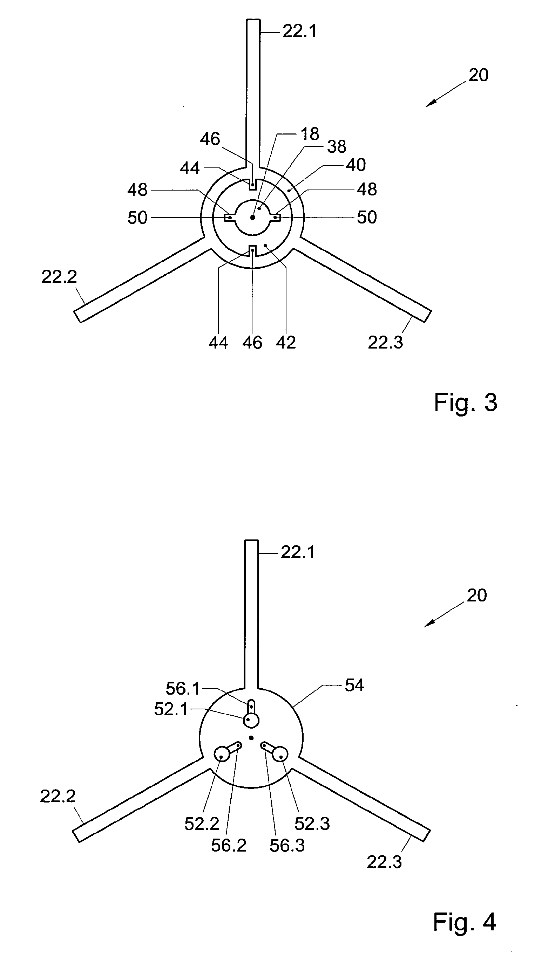

Fig. 3 shows a schematic cross section of an embodiment of a rotor of the wind energy converter according to the invention. Parts in Fig. 3 which correspond to parts in Figs. 1a, 1b, 1c, 1d and/or 2 are designated by corresponding reference numerals.

In Fig. 3, the rotor blades 22.i are connected with a rotor housing 40. The rotor housing extends in the direction of the centerline 18. In Fig. 3, the rotor housing 40 is designed to be hollow, in this example as a tube. In this example, the shaft 38 for connecting the rotor 20 with the building 2 extends along the centerline 18 and inside the rotor housing 40. In the embodiment of Fig. 3, the rotor housing 40 is connected with the shaft 38 by means of resilient means and/or vibration-damping means, in this example by means of a rubber element 42. This offers the advantage that mechanical vibrations and/or shocks arisen in the rotor 20 and/or rotor blades 22.i are not, at least in a damped manner, passed on to the shaft 28. Thus, the receptacle of the shaft 38 in the building is not, at least to a lesser extent, loaded by the mechanical vibrations and/or shocks. It is further possible for the receptacle to be provided with resilient means and/or vibration-damping means, so that the mechanical vibrations and/or shocks transferred to the receptacle, or mechanical vibrations and/or shocks arisen in the receptacle are not, at least in a damped manner, passed on to the building 2.

The rubber element may be connected with the shaft 38 and the rotor housing 40, for instance by means of gluing or vulcanizing. It is also possible that, as shown in Fig. 3, the rubber element 42 is provided with at least one recess 44 which corresponds with at least one protuberance 46 of the rotor housing 40 and/or at least one recess 48 which corresponds with at least one protuberance 50 of the shaft 38, to lock the shaft 38, the rubber element 42 and the rotor housing 40 with respect to one another against relative rotation. It will be clear that it is also possible that the rotor housing 40 is provided with at least one recess which corresponds with at least one protuberance of the rubber element 42 and/or that the shaft 38 is provided with at least one recess which corresponds with at least one protuberance of the rubber element 42.

The windmill 16 of the wind energy converter 1 according to the invention may further be provided with a brake for bringing the rotor 20 to a standstill and/or keeping the rotor 20 in a standstill. The brake may, for instance, engage the shaft 38 of the rotor 20. The brake may comprise a brake known per se, such as for instance, but not exclusively, a brake such as it is used for braking a wheel of a truck. This offers the advantage that, for instance with too strong a wind, the rotor 20 can be braked or be stopped to prevent damage to the rotor 20, windmill 16, and/or wind energy converter 1.

The windmill 16 of the wind energy converter 1 according to the invention may further be arranged for making the rotor 20 assume a predetermined rotational position in a standstill. This may, for instance, be advantageous for providing an esthetically fine appearance of the wind energy converter 1 when the rotor 20 stands still.

Fig. 4 shows a schematic view of a part of an embodiment of a windmill 16 which is suitable to make the rotor assume a predetermined rotational position in a standstill, by means of a positioning apparatus. Parts in Fig. 4 which correspond to parts in Figs. 1a, 1b, 1c, 1d, 2 and/or 3 are designated by corresponding reference numerals.

In Fig. 4, the positioning apparatus of the windmill 16 is provided with weights 52.i. The weights 52.i are movably connected with the shaft 38, in this example with a disc 54 rigidly connected with the shaft 38. It will be clear that the weights may also be movably connected with the rotor 20, for instance with the rotor housing 40. In Fig. 4, the weights 52.i are slidably connected with the shaft 38. To this end, in this example, the disc 54 is provided with radially extending slots 56.i through which the weights can slide.

The operation of the embodiment shown in Fig. 4 is as follows. When the rotor 20 rotates, for instance in use, the weights 52.i will each be moved to their radially outermost position by the centrifugal force. Thereby, the weights 52.i are symmetrically distributed around the centerline 18. When a rotational speed of the rotor 20 is below a predetermined value, the gravity on the topmost weight 52.i, weight 52.1 in Fig. 4, will be greater than the centrifugal force, so that the weight 52.1 slides downwards through the slot 56.1. Thus, the weights 52.i are no longer symmetrically distributed around the centerline 18, and effectively a moment will be exerted on the shaft 38 for keeping the rotor 20 in the position shown.

In Fig. 4, the slots 56.i are directed such that the rotor blade 22.1 points substantially vertically upwards in a standstill. It will be clear that the positioning apparatus may also be arranged such that the rotor 20 can remain in a different predetermined position in a standstill.

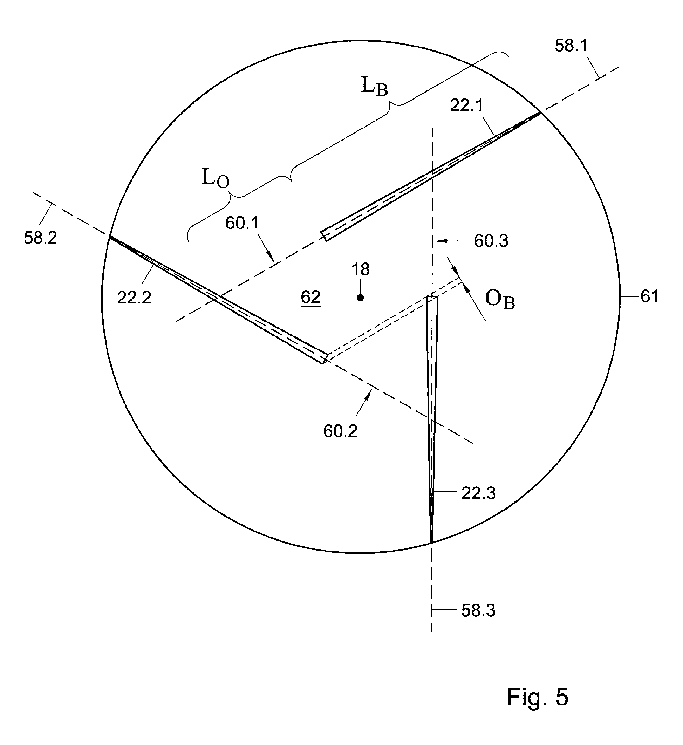

Fig. 5 shows an alternative embodiment of the rotor 20 of the windmill 16 according to the invention. In the example of Fig. 5, the rotor blades 22.i each extend substantially in a plane 58.i remote from the centerline 18 of the rotor 20. In this example, the rotor blades 22.i are substantially flat. In this example, the rotor blades are received between lateral bodies 61 of the rotor 20 at the axial ends of the rotor blades. In this example, the lateral bodies 61 have a disc-shaped design. However, other shapes are also conceivable, such as for instance a triangle, of which the angular points substantially coincide with the edges of the rotor blades remote from the centerline, or a (three-pointed) star shape.

In the example of Fig. 5, the planes 58.i in which the rotor blades 22.i substantially extend are positioned with respect to one another such that the plane 58.1 in which a first rotor blade 22.1 substantially extends intersects a second rotor blade 22.2 adjacent to that rotor blade 22.1. In that plane 58.1, an open space 60.1 is then present between the first rotor blade 22.1 and the second rotor blade 22.2.

Thus, in this example, the plane 58.1 in which the rotor blade 22.1 extends intersects the rotor blade 22.2, while an open space 60.1 is present between the rotor blade 22.1 and the rotor blade 22.2. The plane 58.2 in which the rotor blade 22.2 extends intersects the rotor blade 22.3, while an open space 60.2 is present between the rotor blade 22.2 and the rotor blade 22.3. The plane 58.3 in which the rotor blade 22.3 extends intersects the rotor blade 22.1, while an open space 60.3 is present between the rotor blade 22.3 and the rotor blade 22.1. The open spaces 60.i ensure that an airflow L blowing against the upstream rotor blade 22.1 is not stopped by the rotor 20, but is, conversely, guided through to the downstream rotor blade 22.2 and consequently also blows against the downstream rotor blade 22.2, so that the efficiency of the windmill 16 is increased compared to the rotor having no open spaces 60.i between the rotor blades 22.i. This configuration of rotor blades 22.i and open spaces 60.i offers the advantage that a rotor 20 which can be produced in a simple manner is provided with, for instance, substantially flat rotor blades 22.i, with a relatively high efficiency. It is found that the configuration shown where the number of rotor blades 22.i of the rotor 20 is equal to three provides an excellently efficient rotor which can be produced in a simple manner.

In the example of Fig. 5, a free space 62 is enclosed between the rotor blades 22.1, 22.2 and 22.3. The free space has a triangular cross section in Fig. 5. In this example, the free space 62 is free of obstacles. The free space 62 can also contribute to increasing the efficiency of the windmill. It will be clear that it is also possible for a shaft of the rotor 20 to extend through the free space 62.

The rotor blades are preferably placed such that, with symmetrically placed substantially flat rotor blades 22.i, viewed in a direction parallel to the first rotor blade 22.1, the second rotor blade 22.2 and a third rotor blade 22.3 are placed one partly behind the other. Thus, the second and third rotor blade 22.2, 22.3 overlap in a direction transverse to the first rotor blade 22.1. Preferably, the extent of overlap O_{B}, viewed in the direction transverse to the first rotor blade, is less than 20%, preferably less than 10%, most preferably less than 5% of a length L_{B} of the rotor blades 22.i in the cross section of the rotor. However, it is also possible that the second and third rotor blade 22.2, 22.3 are free of overlap in the direction transverse to the first rotor blade 22.1, so that, in the direction transverse to the first rotor blade, an opening is present between the second and third rotor blade, viewed in the direction parallel to the first rotor blade. The opening is also referred to as "negative overlap". Preferably, a dimension of the opening, viewed in the direction transverse to the first rotor blade, is less than 20%, preferably less than 10%, most preferably less than 5% of a length L_{B} of the rotor blades 22.i.

A dimension of the open space 60.i is preferably chosen such that the length Lo of the open space 60.i between two adjacent rotor blades, measured in line with that rotor blade extending to the other rotor blade, is smaller than 60%, preferably smaller than 40% of the length L_{B} of the rotor blades. The dimension of the open space 60.i is preferably chosen such that the open space 60.i between two adjacent rotor blades, measured in line with that rotor blade extending to the other rotor blade is larger than 10%, preferably larger than 20% of the length L_{B} of the rotor blades.

The rotor blade shown in Fig. 5 operates most efficiently if it is blown from the right side in Fig. 5.

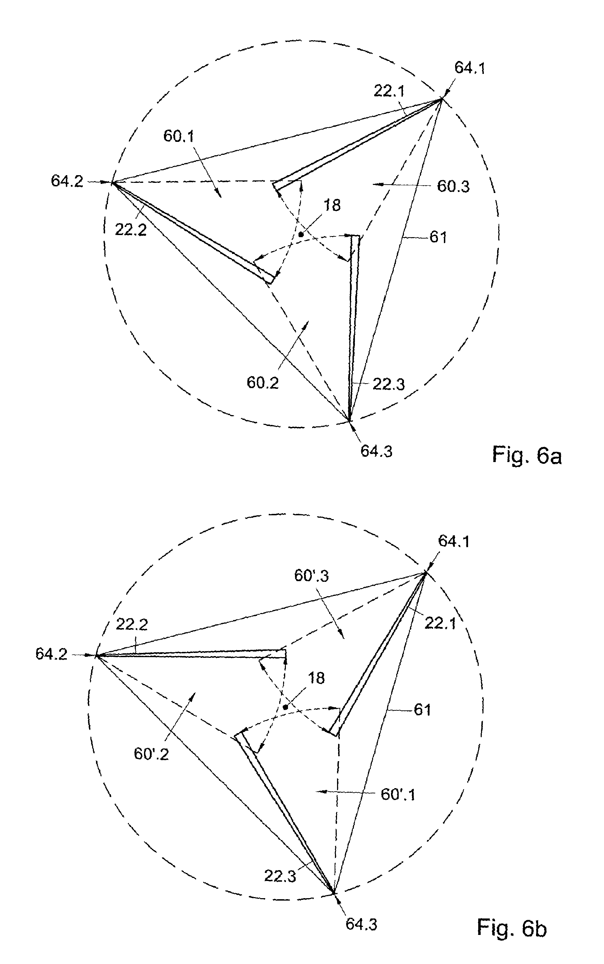

Figs. 6a and 6b show an example of an advanced embodiment of the rotor 20 shown in Fig. 5. In Fig. 6a, the rotor blades 22.i are movably received in the rotor 20 such that the rotor blades 22.i can assume a first and a second position.

If the rotor blades 22.i are in the first position (shown in continuous lines in Fig. 6a, shown in broken lines in Fig. 6b), each rotor blade extends in the direction of the rotor blade located next to the rotor blade mentioned first in counterclockwise direction. Thus, the rotor blade 22.1 extends in the direction of the rotor blade 22.2, while an open space 60.1 is present between the rotor blade 22.1 and the rotor blade 22.2, the rotor blade 22.2 extends in the direction of the rotor blade 22.3, while an open space 60.2 is present between the rotor blade 22.2 and the rotor blade 22.3, and the rotor blade 22.3 extends in the direction of the rotor blade 22.1, while an open space 60.3 is present between the rotor blade 22.3 and the rotor blade 22.1. The rotor blade in the first position shown in Fig. 6a operates most efficiently if it is blown from the right side in Fig. 6a.

If the rotor blades 22.i are in the second position (shown in continuous lines in Fig. 6b, shown in broken lines in Fig. 6a), each rotor blade extends in the direction of the rotor blade located next to the rotor blade mentioned first in clockwise direction. Thus, the rotor blade 22.1 extends in the direction of the rotor blade 22.3, while an open space 60'.1 is present between the rotor blade 22.1 and the rotor blade 22.3, the rotor blade 22.3 extends in the direction of the rotor blade 22.2, while an open space 60'.2 is present between the rotor blade 22.3 and the rotor blade 22.2, and the rotor blade 22.2 extends in the direction of the rotor blade 22.1, while an open space 60'.3 is present between the rotor blade 22.2 and the rotor blade 22.1. The rotor blade in the second position shown in Fig. 6b operates most efficiently if it is blown from the left side in Fig. 6b.

Because, thus, the rotor blades are placeable in the first and the second position, the most efficient rotational sense of the rotor 20 can be adapted to a local or temporary wind direction.

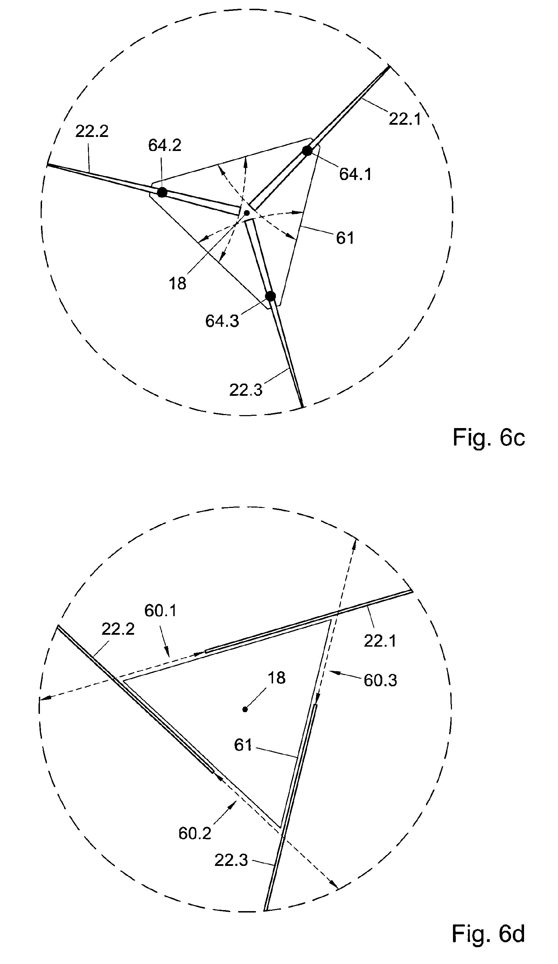

In the example of Figs. 6a and 6b, the rotor blades 22.i are pivotally received in the rotor 20, so that the rotor blades are placeable in the first and the second position. In this example, the rotor blades are pivotable about a (virtual) rotational axis 64.i located near an end of the rotor blades remote from the centerline 18. It will be clear that it is also possible for the rotational axis 64.i to be located at another point such as, for instance, but not exclusively, near an end of the rotor blades proximal to the centerline 18 or, such as shown in Fig. 6c, near a center of the rotor blades. It is also possible that other methods of moving the rotor blades from the first to the second position are possible, such as for instance, but not exclusively, displacing each of the rotor blades in a direction, for instance running tangentially with respect to the centerline of the rotor, in which that rotor blade extends, such as shown in Fig. 6d.

In one embodiment, the rotor blades 22.i are further placeable in a third position, while the third position is a position in which the rotor is blown least efficiently. Such a third position can serve as a "storm position" for securing the windmill with strong (or too strong a) wind. In the example of Fig. 6d, in the third position, the rotor blades 22.i may, for instance, all be placed so as to be centered along the sides of the lateral bodies 61, so that a substantially triangular case (with, optionally, open corners) is formed. In that case, the rotor blades are substantially tangentially positioned with respect to the centerline of the rotor. In the example of Fig. 6c, in the third position, the rotor blades may, for instance, be placed substantially tangentially with respect to the centerline, while likewise a substantially triangular case (with, optionally, open corners) is formed. In the examples of Figs. 6a and 6b, in the third position, the rotor blade may, for instance, be placed substantially radially, or, conversely, substantially tangentially.

Preferably, the rotor blades are received in the rotor so as to be continuously variably movable.

It will be clear that the resilient and/or vibration-damping means, as discussed with reference to Fig. 3, and/or the positioning apparatus as discussed with reference to Fig. 4, may also be used in the windmill provided with the rotor according to Fig. 5, 6a, 6b, 6c or 6d.

According to a further aspect of the invention, the rotor as described with reference to Figs. 5, 6a, 6b, 6c and 6d may also be used in other applications, for instance separately from the building and/or not received in the receiving space.

According to another aspect of the invention, the rotor 20, in particular the rotor blades 22.i, of the windmill 16 may be designed to be light-transmitting, preferably transparent. This offers the advantage that the rotor blades 22.i form, at least substantially, no cast shadow near the wind energy converter 1. Cast shadows are generally experienced as being disturbing by people and animals. In addition, transparent rotor blades offer the advantage that the rotor blades are not well visible, particularly when viewed from some distance, so that the rotor blades have, at least virtually, no disadvantageous effect on the appearance of the building and/or at least cause virtually no so-called landscape pollution. The rotor blades may have either a wholly or partly light-transmitting and/or transparent design. It will be clear that, at least partly, light-transmitting and/or transparent rotor blades may also be used with different wind energy converters and/or windmills, such as for instance, but not exclusively, windmills provided with a propeller-shaped rotor.

It is further possible that both the rotor blades and the gutter have an, at least partly, light-transmitting and/or transparent design. This offers the advantage that the windmill serves as a skylight for supplying outside light to the building.

The wholly or partly light-transmitting and/or transparent rotor blades may, for instance, be wholly or partly manufactured from glass, safety glass and/or plastic, such as for instance, but not exclusively, polymethyl methacrylate (PMMA), polyethylene terephthalate (PET), polyester, polycarbonate, polystyrene, styrene acrylonitrile (SAN), cellulose acetate butyrate (CAB) and/or polyvinyl chloride (PVC). It will be clear that, if the rotor blades are not wholly light-transmitting and/or transparent, the rotor blades may also comprise other materials, such as metal, wood, fiber plate, plastics and the like.

In the examples, the wind energy converter comprises a building. However, it is also possible for the wind energy converter to comprise a plurality of buildings. Figs. 5a and 5b show schematic representations of embodiments of the wind energy converter 1 according to the invention provided with a first building 2' and a second building 2".

In the example of Fig. 5a, the roof 10 of the plurality of the buildings 2', 2" comprises the first roof part 12 and the second roof part 14. In this example, the receiving space 4 is formed by an intermediate space between the first and the second building 2', 2". Thus, the assembly of the first and the second building provides the receiving space. In this example, it is possible for the windmill 16 to be connected with the first building 2' and/or the second building 2". However, it is also possible for the windmill to be provided with a frame (not shown) which is connected with the ground between the buildings 2', 2".

In the example of Fig. 5b, the roof 10 of the plurality of buildings 2', 2" comprises the upwardly inclined first roof part 26 and the upwardly inclined second roof part 28. In this example, the receiving space 4 is formed by a space above a third roof part 31 and a fourth roof part 33. Thus, the assembly of the first and the second building provides the receiving space. The first edge 27 of the roof forms the first edge of the open top side of the receiving space 4. The second edge 29 of the roof forms the second edge of the open top side of the receiving space 4. In this example, the first edge 27 of the roof coincides with the ridge 30.1 and the second edge 29 of the roof coincides with the ridge 30.2. It will be clear that, in the example of Fig. 5b, it is possible that the first building 2' and the second building 2" are connected and thus form one building.

It will be clear that what was explained with respect to the examples in which the wind energy converter 1 comprised only one building 2 correspondingly applies to the wind energy converter comprising a plurality of buildings.

In the examples, each rotor is provided with three rotor blades. Thus, a simple rotor is provided. In the examples, in a standstill, the rotor is positioned such that a rotor blade points substantially vertically upwards. This offers the advantage that, with a rotor with three rotor blades, the other two rotor blades point downwards, so that rain, and/or other precipitation, falling on the rotor blades can slide, slip or flow off the rotor blades, for instance to the gutter, so that the precipitation can be discharged in a simple manner and forms no load for the rotor and/or a suspension of the rotor.

It will be clear that it is also possible for the rotor to comprise more than three rotor blades. In that case, it is desired that the rotor blades comprise an opening near the centerline for allowing precipitation to pass downwards.

In the examples, the centerline 18 of the rotor has a predetermined orientation with respect to the building. It is also possible for the centerline to be rotatable about a rotational axis extending substantially vertically. To this end, for instance, the receptacle of the axis may be received in a frame rotatable about the rotational axis. This offers the advantage that the centerline of the rotor can be positioned such that the centerline extends transversely to the wind direction, so that the efficiency of the wind energy converter is optimal. It is then also possible that the roof, for instance the top roof 34 shown in Fig. 1d, is placed on the building such that the roof including the windmill is rotatable about the rotational axis extending substantially vertically. It will be clear that such a top roof 34, optionally arranged for rotation about the vertical rotational axis, may also be placed directly on a ground, such as for instance a field or meadow. Then the building is formed by the top roof and optionally a base, such as a foundation, for the top roof and/or for the rotational axis and/or for an apparatus for rotation of the top roof about the rotational axis.

In the examples, the resilient and/or vibration-damping means between the rotor blades and the building are formed by the rubber element. It will be clear that other resilient and/or vibration-damping means may also be used, such as for instance, but not exclusively, compression springs, draw springs, bending springs, torsion springs, gas springs, hydraulic dampers, elastic elements, electrical and/or magnetic resilient and/or vibration-damping elements.

The rotor blades shown in the examples have a substantially rectangular cross section viewed in a plane transverse to the centerline of the rotor. It will be clear that the cross section of the rotor blades may also have a different shape such as for instance, but not exclusively, a triangle. Further, each, or one of the lateral surfaces of the rotor blade extending substantially in the longitudinal direction and the radial direction of the rotor may be either concave or convex. Herein, concave is understood to mean that the lateral surface has a cavity which may have either a smooth or an angular shape. Herein, convex is understood to means that the lateral surface has a bulge which may have either an smooth or an angular shape. The concave or convex lateral surface may then have a curve and/or bend in a longitudinal direction of the rotor and/or in a radial direction of the rotor. In particular a concave lateral surface of the rotor blade has the advantage that wind force is concentrated on the rotor blade and that less wind will slide from the free edges of the rotor blade. This holds both if the rotor blade is blown by wind from a direction which is transverse to the centerline of the rotor and if the rotor blade is blown by wind from a direction which is not transverse to the centerline of the rotor.

A surface of a rotor blade may be substantially smooth. However, it is also possible for the surface of the rotor blade to have a surface structure such as for instance, but not exclusively, a corrugated structure, where the corrugations may extend both in the longitudinal direction and in the radial direction.

In the examples, each rotor blade extends substantially in a flat plane. However, it is also possible for the rotor blade to extend, for instance, in a plane twisted about the centerline which substantially intersects the centerline. Such a twisted plane is also considered to extend substantially parallel to the centerline.

In the examples, each rotor blade extends in a plane extending substantially parallel to the centerline and preferably comprising the centerline. It is also possible that at least one rotor blade extends in a plane including an angle with the centerline. In a special variant, the angle included by the rotor blade and the centerline by may be settable, for instance around an (optionally virtual) setting shaft extending transversely to the centerline, for instance to adjust the included angle to a (temporary) wind direction.

Such variants are all considered to fall within the framework of the invention.

## Claims

1. A wind energy converter comprising at least one building and a windmill provided with a rotor rotatable about a centerline, which rotor is provided with a plurality of rotor blades, **characterized in that** the at least one building provides a receiving space which is open at the top, wherein the rotor is at least partly recessed in the receiving space such that, during rotation of the rotor about the centerline, the extent to which at least one rotor blade of the plurality of rotor blades is recessed in the receiving space varies.

2. A wind energy converter according to claim 1, wherein the rotor blades each substantially extend in a plane extending substantially parallel to the centerline of the rotor.

3. A wind energy converter according to claim 1 or 2, wherein the rotor blades each substantially extend in a plane remote from the centerline of the rotor.

4. A wind energy converter according to claim 3, wherein the plane in which a first rotor blade substantially extends intersects a second rotor blade adjacent to that rotor blade, and wherein, preferably, in that plane, there is an open space between the first rotor blade and the second rotor blade.

5. A wind energy converter according to claim 3 or 4, wherein the rotor blades are movably received in the rotor such that the rotor blades can assume a first and a second position, wherein, if the rotor blades are in the first position, each rotor blade extends in the direction of the rotor blade located next the rotor blade mentioned first in counterclockwise direction, and wherein, if the rotor blades are in the second position, each rotor blade extends in the direction of the rotor blade located next to the rotor blade mentioned first in clockwise direction.

6. A wind energy converter according to any one of the preceding claims, wherein the number of rotor blades is three.

7. A wind energy converter according to any one of the preceding claims, wherein at least one rotor blade is flat, wherein preferably all rotor blades are flat.

8. A wind energy converter according to any one of the preceding claims, wherein the windmill is placed at a roof of the at least one building, for instance is received in the roof of the at least one building.

9. A wind energy converter according to any one of the preceding claims, wherein at least one rotor blade of the plurality of rotor blades is at least partly light-transmitting, preferably transparent.

10. A wind energy converter according to any one of the preceding claims, wherein the centerline of the rotor is rotatable about a rotational axis extending substantially vertically.

11. A windmill of the wind energy converter according to any one of the preceding claims.
